# EUROPEAN PATENT SPECIFICATION

(11) **EP 0 488 636 B1**
(45) Date of publication and mention of the grant of the patent: **21.08.1996**
(21) Application number: 91310857.7
(22) Date of filing: 26.11.1991
(51) Int. Cl.: B29D 30/06

(54) **Method for vulcanising tyre and apparatus used therefor**
Verfahren und Vorrichtung zum Vulkanisieren von Reifen
Procédé et dispositif pour la vulcanisation de pneus

(30) Priority: 30.11.1990 JP 339594/90
(43) Date of publication of application: 03.06.1992
(73) Proprietor: SUMITOMO RUBBER INDUSTRIES LIMITED, Chuo-ku Kobe-shi Hyogo 651 (JP)
(72) Inventor: Kubota, Akinori, Suma-ku, Kobe-shi, Hyogo-ken (JP); Kubota, Yoshiya, Shiga-cho, Toyota-shi, Aichi-ken (JP); Okamoto, Shoji, Toyota-shi, Aichi-ken (JP); Ijiri, Masaaki, Tougou-cho, Aichi-gun, Aichi-ken (JP); Soeda, Koji, Kobe-shi, Hyogo-ken (JP)
(74) Representative: Stewart, Charles Geoffrey

(56) References cited:
- EP-A- 0 372 921
- US-A- 2 997 740
- US-A- 3 887 313
- US-A- 4 222 721
- PATENT ABSTRACTS OF JAPAN vol. 006, no. 178 (M-155) 11 September 1982 & JP-A-57 087 349 (SUMITOMO RUBBER IND. LTD.)
- PATENT ABSTRACTS OF JAPAN vol. 12, no. 55 (M-669)(2902) 19 February 1988 & JP-A-62 201 206 (BRIDGESTONE CORP.) 4 September 1987

## Description

The present invention relates to a method for vulcanising a tyre and an apparatus used therefor.

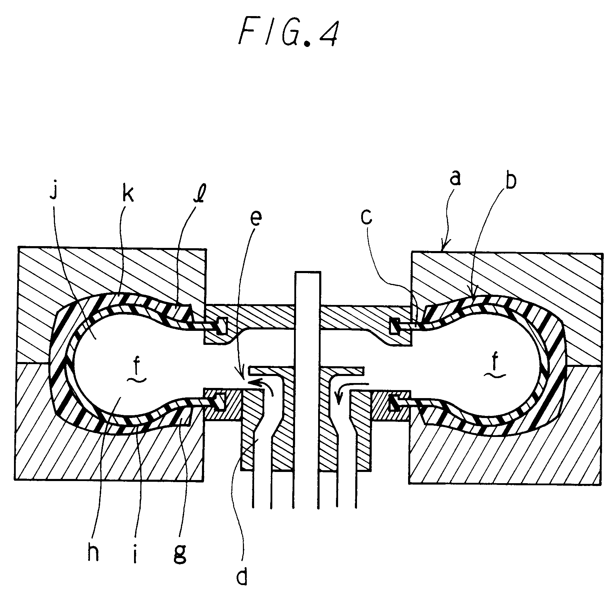

Hitherto, the apparatus shown in Figure 4 has been employed as an apparatus for vulcanising a tyre for a vehicle. In this case, a tyre b is placed inside a mould a, the mould a is closed, and a bladder c is inflated by providing an internal shaping pressure, so that the shape of the tyre b moves to fit the inside shape of the mould. Then steam as a heating medium is supplied to the mould cavity,in a nearly horizontal direction, into the tyre internal space f to heat and pressurise the tyre b. The steam is blown from a supply opening e which is arranged at a lower part of a centre portion of the vulcanising apparatus and is the outlet for a supply passage d. When the tyre b is heated to a predetermined temperature or after a predetermined time period, the supply of steam is stopped and thereafter combustion gas, gaseous nitrogen or the like, as a pressurising medium, the pressure of which is the same as or more than that of the steam, is supplied, in a nearly horizontal direction, into the tyre internal space from the supply opening e. By virtue of the gas, the tyre b is kept at a predetermined temperature during the remaining time period for heating till tyre vulcanisation is finished.

In another case using the latest known apparatus, a structure is used in which heating medium and pressurising gas having a relatively low temperature compared to the steam is blown, in a horizontal direction, towards the lower portion of the tyre from a supply opening arranged at a low position relative to the tyre b, from which the steam is also blown. Accordingly, the part to which the gas flow is directed (i.e. the lower bead g) is cooled and its temperature is lowered. Further, when the pressurising gas inflow ceases due to the increased internal pressure and accordingly the internal flow of the pressurising gas ceases, the gas tends to gather in the lower portion h of the internal space f of the tyre b because the specific gravity of the gas is relatively larger than that of steam. Accordingly, the temperature of the lower sidewall i and the lower bead g in contact with the pressurising gas of the lower temperature is lowered. On the other hand, the steam tends to gather in the upper portion j of the internal space f of the tyre b and the temperature of the steam rises further by adiabatic compression, although it only lasts for a short time, because of the gas introduced at a higher pressure though the temperature thereof is low. This causes the temperature of the upper sidewall k and the upper bead l to rise.

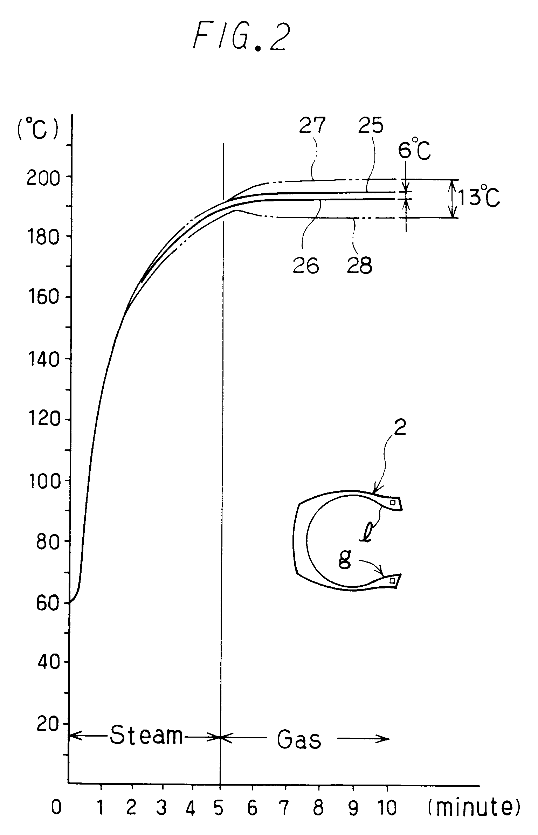

Thus, in the tyre internal space f, there appears a layer comprising mainly steam in the upper portion j and another layer comprising mainly gas in the lower portion h. Accordingly, the temperature of the inside of the tyre b changes as shown in Figure 2. That is, after the gas is supplied, the temperature at the upper bead l tends to rise as shown by the virtual line 27, and the temperature at the lower bead g tends to fall as shown by the virtual line 28. Consequently, there occurs a large temperature difference (for example, 13°C) between the upper bead l and the lower bead g.

Once the above-mentioned large temperature difference occurs, it does not completely disappear until vulcanisation is finished. For this reason, the degree of vulcanisation in the upper and lower sidewalls differs, and this is undesirable in respect of tyre quality. In addition, since the necessary cure time is decided according to the lower portions of the tyre where the speed of temperature rise is most retarded, a vulcanising operation of a longer duration has to be conducted and this is another undesirable problem also in respect of productivity and energy saving.

A tyre curing method and apparatus according to the preamble of claims 1 and 3 is disclosed in US-A-4222721 wherein a curing medium of high temperature hot water is purged from the interior of the tyre by a high pressure inert gas prior to the introduction of cold water to cool the cured tyre. Both the hot water and the inert gas are introduced into the interior of the tyre via a discharge port positioned above the equator of the tyre and are directed upwards towards an end plate of a centre mechanism. The disclosure of US-A-4222721 is directed towards energy conservation by recovering the hot water without substantially changing its thermodynamic state.

The apparatus employing a structure wherein the supply openings for the heating medium and the pressurising medium are arranged separately has a drawback in that the apparatus becomes complicated because the supply of mediums for vulcanisation is separate.

In consideration of the above-mentioned drawbacks of the conventional apparatus, an object of the present invention is to provide a method for vulcanising a tyre and an apparatus used therefor wherein a temperature difference is avoided inside the tyre during vulcanisation, uniform vulcanisation can be carried out, and the structure of the whole apparatus is not complicated.

Accordingly the present invention provides a method for vulcanising a tyre wherein firstly heating medium is supplied and secondly pressurising medium is supplied inside the tyre, the heating medium and the pressurising medium both being blown from a supply opening arranged at a position above an equator of the tyre in a mould, characterised in that the heating medium and the pressurising medium are blown downwardly towards a portion of the inner surface of the tyre below the equator of the tyre.

Another aspect of the invention provides an apparatus for vulcanising a tyre comprising a supply opening for blowing heating medium and pressurising medium inside the tyre, the supply opening being arranged at a position above an equator of the tyre in a mould characterised in that the supply opening is directed downwardly towards a portion of the inner surface of the tyre below the equator of the tyre.

Preferably the supply opening is positioned on an upper bladder clamp of a mould. Further, the supply opening may be formed in an attachable supply nozzle.

In the present invention, the lower bead is not cooled because the heating medium and pressurising medium are both blown from an upper position above the tyre equator in a downward direction. Moreover, it is not necessary to form supply openings for heating medium and pressurising medium separately, so that one supply opening can be used for both. The present invention will be further understood from the following description, by way of example only, of embodiments in conjunction with the attached diagrammatic drawings in which:-
Figure 1A is a cross section showing an embodiment of a vulcanising apparatus of the present invention;
Figure 1B is a perspective view showing a supply nozzle;
Figure 2 is a graph showing changes of tyre temperature during vulcanisation;
Figure 3 is a cross section showing another embodiment of a vulcanising apparatus of the present invention; and
Figure 4 is a cross section showing a conventional apparatus.

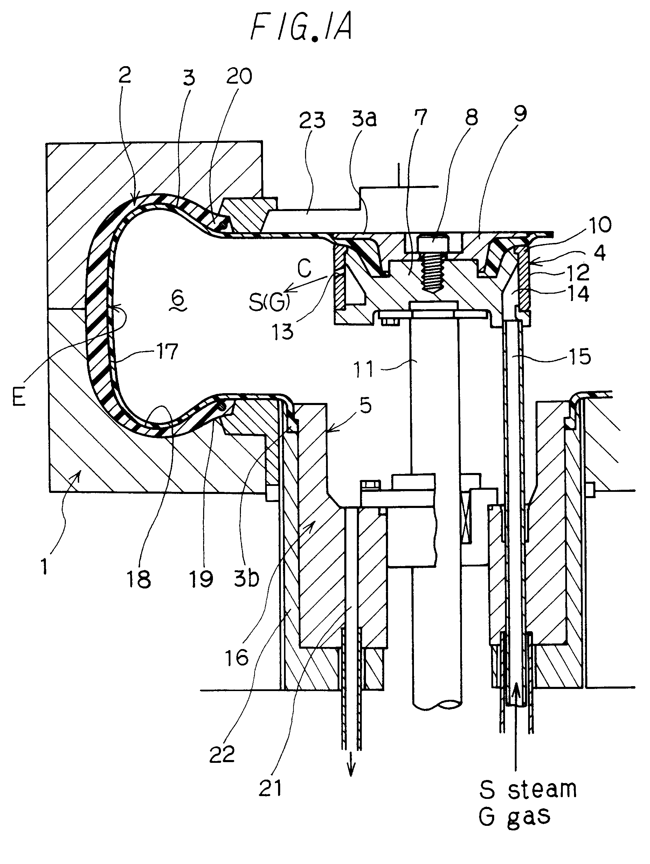

Figure 1A shows an apparatus of the rolling-in-bladder type used for vulcanising a tyre. In this apparatus, a green tyre 2 is placed in a vulcanisation chamber 6, and a mould 1 is closed. A bladder 3 having an upper inner edge portion 3a is held by an upper bladder clamp 4 and a lower inner edge portion 3b held by a lower bladder clamp 5 is inflated by providing a pre-shaping internal pressure, so that the green tyre 2 is shaped nearly to the shape defined by the internal surface of the mould 1. Thereafter, heating medium such as steam is supplied into the bladder 3 to heat and pressurise the green tyre 2, which green tyre 2 is then situated as shown in predetermined temperature or after a predetermined time period, the supply of heating medium is ceased. Then, gas such as gaseous nitrogen, as a pressurising medium, having a pressure not lower than that of the heating medium is supplied into the bladder 3, until the remaining time period of the heating step is over. Thus, the temperature of the green tyre 2 is kept at a predetermined temperature, and the vulcanising is finished.

The upper bladder clamp 4 comprises a block 7, a ring 9 attached to the block 7 by an attachment member 8 such as a bolt, and a supply nozzle 10 attached to the block 7. The upper bladder clamp 4 is mounted on a centre post 11. The upper inner edge portion 3a of the bladder 3 is held by the ring 9 and the block 7.

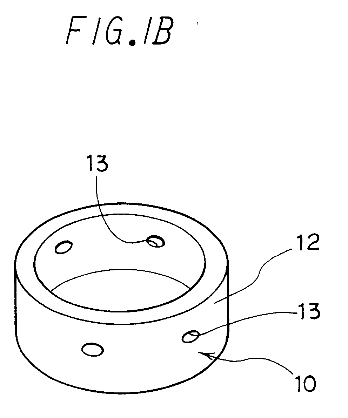

As shown in Figure 1B, the supply nozzle 10 comprises a short cylindrical body in which supply openings 13 are formed on a circumferential wall 12 at predetermined intervals around the circumferential direction. The nozzle 10 is assembled to the block 7 and the block 7 and the nozzle 10 define an annular space 14 therebetween.

The space 14 communicates with the vulcanisation space 6 via the supply openings 13. The openings 13 are directed diagonally downward. Further, the number and diameter of the openings 13 can be selected in accordance with tyre size of the like.

A supply passage 15 for supplying heating medium and pressurising medium to the space 14 is connected to the block 7. The passage 15 passes through a bagwell 16 and is connected to a heating medium source and a pressurising medium source. Thus, heating medium supplied to the passage 15 is blown towards the inner surface 17 of the tyre 2, as shown by arrow C, from the supply opening 13 through the space 14. Similarly, pressurising medium supplied to the passage 15 is blown towards the inner surface 17 of the tyre 2, as shown by the arrow C, from the supply opening 13 through the space 14.

In this embodiment, the supply opening 13 is opened towards a vicinity below an equator E of the tyre 2 so that the heating medium and the pressurising medium are blown, as shown by the arrow C, diagonally downwards across the tyre internal space. Thus, the jet moves along the tyre internal surface 17, passes a lower sidewall 18 of the tyre 2, and forces accumulated drain towards a lower bead 19 to discharge it into the bagwell 16. The supply passage of the supply opening 13 is inclined relative to the radial direction of the tyre 2 so that heating medium blown from the opening 13 turns in a circumferential direction.

The bagwell 16 is provided with a discharge passage 21 for discharging drain, steam, gas and the like. The bagwell 16 is held by a holder 22. When the bagwell 16 is held by the holder 22, upper edge portions of the bagwell 16 and of the holder 22 engage and grip the lower inner edge portion 3b of the bladder 3. That is, the upper edge portions of the bagwell 16 and of the holder 22 form a lower bladder clamp 5.

Next, the method for vulcanising a tyre in an apparatus having the above structure is explained.

Firstly, a green tyre 2 is placed on the outer circumference of the bladder 3, and the mould 1 is closed. Then, medium for shaping is supplied into the bladder 3 through a pipe (not shown) so that the bladder 3 is inflated to shape the tyre 2 nearly to the shape defined by the internal surface of the mould 1.

Then, steam at a predetermined pressure is supplied to the supply passage 15 and the steam is blown for five minutes into the vulcanisation space 6 towards the tyre internal surface 17 from the supply opening 13. In this case, as mentioned above,. accumulated drain inside the tyre 2 is introduced into the discharge passage 21 by the blown jet and is discharged outside. By virtue of this discharge, the temperature of the lower sidewall 18 rises. Thus, by the supply of steam, the temperature of the green tyre 2 rises to an extent that the vulcanising reaction can be progressed.

Thereafter, the supply of the steam is ceased and pressurising gas having a lower temperature nearer to room temperature (for example 40°C) and at a pressure the same as or more than that of the steam is supplied to the supply passage 15. The pressurising gas is blown for five minutes into the vulcanisation space 6 towards the tyre internal space 17 from the same supply opening 13 as the case of the steam. Thus, the pressurising gas blown from the opening 13 cools down and agitates the inside of the tyre 2, and finally is mixed with the steam. Consequently, the generation of a large temperature difference between the upper portion and the lower portion in the tyre 2 is prevented.

After the vulcanisation is finished, the mixture of gas and steam in the vulcanisation space 6 is discharged through the discharge line by opening a valve in the pipe (not shown). Thereafter, the bladder 3 is separated from the tyre 2 by shutting the valve and opening other valve, lowering the upper clamp ring 23, and lowering the centre post 11 and the bagwell 16. Then, the mould is opened, and finally the vulcanised tyre 2 is taken out.

In the Figures, symbol S represents steam as a heating medium and symbol G represents gas as a pressurising medium.

Figure 2 shows changes of temperature at a portion l of the upper bead 20 and a portion g of the lower bead 19 of the tyre 2. The temperature of the portion l changes as shown by a line 25 after the supply of gas, and the temperature of the portion g changes as shown by a line 26 after the supply of gas. The temperature difference is aobut 6°C between the portions l and g, which is much smaller than that of the prior art (13°C).

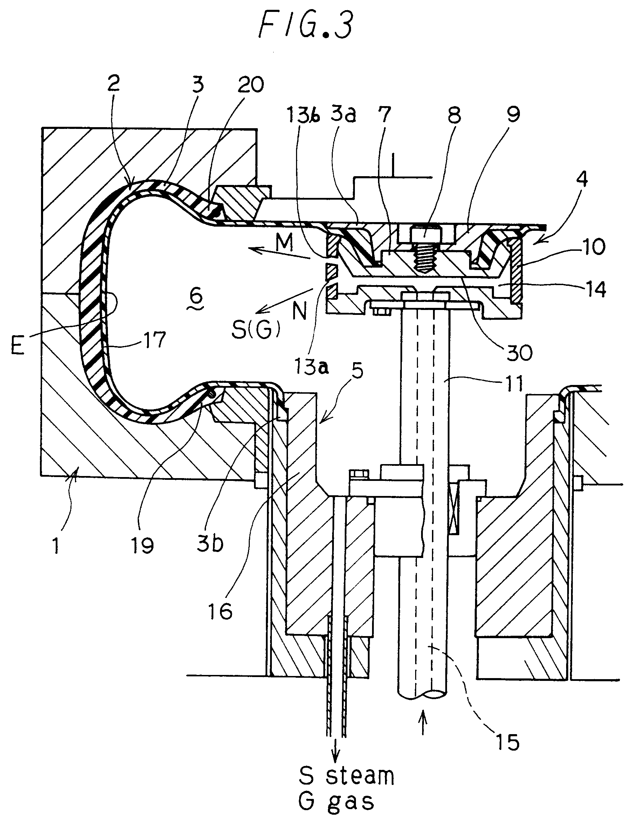

Figure 3 shows another embodiment of the present invention. In this embodiment, a supply passage 15 for the heating medium and pressurising medium is formed through a centre post 11. A communicating passage 30 communicating with the space 14 is formed on the block 7, and the communicating passage 30 is communicated with the supply passage 15 of the centre post 11.

In this case, two kinds of supply openings 13 in a supply nozzle 10 are employed, that is, a supply opening 13a directed downwards and a supply opening 13b directed upwards are both employed. In this embodiment, the one directed upwards is directed towards the upper sidewall of the tyre 2 as shown by arrow M, and the one directed downwards is directed towards a lower sidewall of the tyre 2 as shown by an arrow N. Each medium is blown into the tyre 2 simultaneously with being directed upwards and downwards respectively so that abnormal cooling at a lower bead 19 is prevented.

Thus, in this embodiment, the temperature difference between the upper portion and the lower portion of the tyre 2 is certainly prevented.

The present invention is not limited to embodiments stated above. For example, an apparatus of Bag-O-Matic type or an apparatus of the bladderless type in which a bladder is not used can be employed.

According to the method and the apparatus of the present invention, the following effects can be achieved.

In vulcanisation, abnormal cooling at the lower bead of a tyre is prevented and consequently a large temperature difference inside the tyre is prevented, so that uniform vulcanisation is carried out to provide products having high quality. Further, the preventing of the temperature difference makes it possible to shorten the time period required for vulcanisation, to improve productivity, and to reduce energy loss.

A supply opening for supplying pressurising medium and another supply opening for supplying heating medium are not required to be formed separately and one common supply opening can be used so that the structure of the whole apparatus can be simplified and consequently this apparatus can be manufactured cheaply and easily.

As the supply nozzle 10 is detachable, a supply nozzle 10 having a blowing direction corresponding to the shape and size of a tyre 2 can be fitted easily so that heating medium and pressurising medium can be supplied in the optimum direction and quantity for the tyre concerned.

## Claims

1. A method for vulcanising a tyre (2) wherein firstly heating medium (S) is supplied and secondly pressurising medium (G) is supplied inside the tyre (2), the heating medium (S) and the pressurising medium (G) both being blown from a supply opening (13,13a) arranged at a position above an equator (E) of the tyre (2) in a mould (1), characterised in that the heating medium (S) and the pressurising medium (G) are blown downwardly towards a portion of the inner surface (17) of the tyre (2) below the equator (E) of the tyre.

2. The method of claim 1, wherein the heating medium (S) and pressurising medium (G) are passed through the upper bladder clamp (4) of the mould (1) so they are supplied at the position above the equator.

3. An apparatus for vulcanising a tyre (2) comprising a supply opening (13,13a) for blowing heating medium (S) and pressurising medium (G) inside the tyre (2), the supply opening (13,13a) being arranged at a position above an equator (E) of the tyre in a mould (1) characterised in that the supply opening (13,13a) is directed downwardly towards a portion of the inner surface (17) of the tyre (2) below the equator (E) of the tyre (2).

4. The apparatus of claim 3, characterised in that the supply opening (13,13a) is arranged in an upper bladder clamp (4) of the mould (1).

5. The apparatus of any one of claims 3 and 4, characterised in that the supply opening (13,13a) is formed in a detachable supply nozzle (10).

6. The apparatus of claim 5, characterised in that a plurality of supply openings (13,13a) are formed in the detachable supply nozzle (10).

## Patentansprüche

1. Ein Verfahren zum Vulkanisieren eines Reifens (2), worin in den Reifen (2) als erstes ein Heizmedium (S) zugeführt wird und als zweites ein Unterdrucksetzungsmedium (G) zugeführt wird, wobei sowohl das Heizmedium (S) als auch das Unterdrucksetzungsmedium (G) aus einer Zufuhröffnung (13, 13a) geblasen werden, die in einer Position über einem Äquator (E) des Reifens (2) in einer Formvorrichtung (1) angeordnet ist,
dadurch **gekennzeichnet**,
daß das Heizmedium (S) und das Unterdrucksetzungsmedium (G) nach unten in Richtung eines Abschnitts der Innenfläche (17) des Reifens (2) unter dem Äquator (E) des Reifens geblasen werden.

2. Das Verfahren nach Anspruch 1, worin das Heizmedium (S) und das Unterdrucksetzungsmedium (G) durch die obere Heizmembranklemme (4) der Formvorrichtung (1) geleitet werden, so daß sie an der Position über dem Äquator zugeführt werden.

3. Eine Vorrichtung zum Vulkanisieren eines Reifens (2) mit einer Zufuhröffnung (13, 13a) zum Blasen eines Heizmediums (S) und eines Unterdrucksetzungsmediums (G) in den Reifen (2), wobei die Zufuhröffnung (13, 13a) an einer Position über einem Äquator (E) des Reifens in einer Formvorrichtung (1) angeordnet ist,
dadurch **gekennzeichnet**,
daß die Zufuhröffnung (13, 13a) nach unten in Richtung eines Abschnitts der Innenflache (17) des Reifens (2) unter dem Äquator (E) des Reifens (2) gerichtet ist.

4. Die Vorrichtung nach Anspruch 3,
dadurch **gekennzeichnet**,
daß die Zufuhröffnung (13, 13a) in einer oberen Heizmembranklemme (4) der Formvorrichtung (1) angeordnet ist.

5. Die Vorrichtung nach einem der Ansprüche 3 oder 4,
dadurch **gekennzeichnet**,
daß die Zufuhröffnung (13, 13a) in einer abnehmbaren Zufuhrdüse (10) ausgebildet ist.

6. Die Vorrichtung nach Anspruch 5,
dadurch **gekennzeichnet**,
daß eine Vielzahl von Zufuhröffnungen (13, 13a) in der abnehmbaren Zufuhrdüse (10) ausgebildet ist.

## Revendications

1. Procédé de vulcanisation d'un pneumatique (2), dans lequel un fluide de chauffage (S) est d'abord transmis, puis un fluide de mise sous pression (G) est transmis à l'intérieur du pneumatique (2), le fluide de chauffage (S) et le fluide de mise sous pression (G) étant tous deux soufflés par une ouverture de transmission (13, 13a) ayant une position qui se trouve au-dessus de l'équateur (E) du pneumatique (2) dans un moule (1), caractérisé en ce que le fluide de chauffage (S) et le fluide de mise sous pression (G) sont soufflés vers le bas, vers une partie de la surface interne (17) du pneumatique (2) au-dessous de l'équateur (E) du pneumatique.

2. Procédé selon la revendication 1, dans lequel le fluide de chauffage (S) et le fluide de mise sous pression (G) sont transmis par la pince supérieure (4) de vessie du moule (1) de manière qu'ils soient transmis à un emplacement qui se trouve au-dessus de l'équateur.

3. Appareil de vulcanisation d'un pneumatique (2), comprenant une ouverture (13, 13a) de transmission destinée au soufflage d'un fluide de chauffage (S) et d'un fluide de mise sous pression (G) à l'intérieur du pneumatique (2), l'ouverture de transmission (13, 13a) ayant une position qui se trouve au-dessus de l'équateur (E) du pneumatique dans un moule (1), caractérisé en ce que l'ouverture de transmission (13, 13a) est dirigée vers le bas, vers une partie de la surface interne (17) du pneumatique (2) au-dessous de l'équateur (E) du pneumatique (2).

4. Appareil selon la revendication 3, caractérisé en ce que l'ouverture de transmission (13, 13a) est formée dans une pince supérieure (4) de vessie du moule (1).

5. Appareil selon l'une des revendications 3 et 4, caractérisé en ce que l'ouverture de transmission (13, 13a) est formée dans une buse amovible de transmission (10).

6. Appareil selon la revendication 5, caractérisé en ce que plusieurs ouvertures de transmission (13, 13a) sont formées dans la buse amovible de transmission (10).
